**Europäisches Patentamt**

**European Patent Office**

**Office européen des brevets**

(11) Veröffentlichungsnummer: **0 171 568 B1**

# EUROPÄISCHE PATENTSCHRIFT

(45) Veröffentlichungstag der Patentschrift:
**02.11.88**

(21) Anmeldenummer: **85108100.0**

(22) Anmeldetag: **29.06.85**

(51) Int. Cl.⁴: **F 02 F 3/08**

(54) Aluminium-Tauchkolben für Verbrennungsmotoren mit Regelstreifen.

(30) Priorität: **16.08.84 DE 3430132**

(43) Veröffentlichungstag der Anmeldung:
**19.02.86 Patentblatt 86/8**

(45) Bekanntmachung des Hinweises auf die Patenterteilung:
**02.11.88 Patentblatt 88/44**

(84) Benannte Vertragsstaaten:
**DE FR GB IT**

(56) Entgegenhaltungen:
**DE-C-566 738**
**US-A-1 864 384**

(73) Patentinhaber: **MAHLE GMBH, Pragstrasse 26- 46 Postfach 50 07 69, D-7000 Stuttgart 50 (DE)**

(72) Erfinder: **Ellermann, Jürgen, Georg- Brandt- Weg 12, D-7057 Winnenden (DE)**
Erfinder: **Pfeiffenberger, Horst, Dahlienweg 8, D-7012 Fellbach (DE)**
Erfinder: **Ripberger, Emil, Brunnenstrasse 6, D-7148 Remseck 3 (DE)**

LIBER, STOCKHOLM 1988

**Beschreibung**

Die Erfindung betrifft einen Aluminium-Tauchkolben nach dem Oberbegriff des Patentanspruchs 1.

Derartige sogenannte Regelkolben sind in den verschiedenartigsten Ausführungsformen, von denen diejenigen nach DE-C-566 738 nur als mögliche Beispiele genannt seien, seit langem bekannt. Sie werden auch in der Praxis in großem Umfang eingesetzt.

Mit Regelkolben dieser Art soll vor allem die Laufruhe von Kolben, besonders bei hochbelasteten Otto- und Dieselmotoren für Personenkraftwagen, verbessert werden. Durch das Eingießen von ringförmigen oder plattenförmigen Gliedern aus Stahl in den Kolbenschaft kann die Wärmeausdehnung im gewünschten Sinne beeinflußt werden.

Bei niedrig beanspruchten Kolben ist die Ringpartie vom Schaft in Druck- und Gegendruckrichtung in der Regel durch einen Schlitz getrennt. Dadurch wird einmal der zu regelnde Schaft vom steifen Kolbenboden getrennt. Zum anderen wird durch die Ableitung des Wärmeflusses in Richtung Bolzenaugen ein zusätzlicher günstiger Regelungseffekt erzielt.

Die Regelglieder können Ring- oder Platten- (bzw. Streifen-) Form haben. Die ringförmigen Regelglieder sind am oberen Schaftende eingelegt und behindern die Wärmeausdehnung im wesentlichen nur in einem recht engen Bereich am oberen Schaftende. Plattenförmige Streifen, die im Bereich der Bolzennaben eingegossen sind, haben dagegen eine relativ starke Wirkung im gesamten Schaftbereich. Während in Druck- und Gegendruckrichtung die Wärmeausdehnungszahl gegenüber der des Kolbenmaterials herabgesetzt wird, führt die Streifenwirkung zu einer Vergrößerung dieser Zahl in Bolzenrichtung.

Bei allen bekannten Regelkolben, sind die Regelglieder und die Gestaltung des Kolbenschaftes so aufeinander abgestimmt, daß die Wärmeausdehnung des Kolbens in Druck-Gegendruckrichtung entweder am oberen oder unteren Ende des Schaftes minimal ist.

Will man bei derartigen Kolbenkonstruktionen eine Schaftform verwirklichen, bei der am oberen und unteren Schaftende die Endbereiche zur Erzeugung eines hydrodynamisch wirkenden Schmierfilmkeiles leicht ballig eingezogen sind, wie dies beispielsweise bei einem Kolben nach US-A-1 864 384 der Fall ist, so hat dies, wenn man, wie üblich den Bereich engsten Spieles zwischen Kolbenschaft und Zylinderwand in den Abschnitt geringster Ausdehnung legt, den Nachteil, daß eine enge für eine minimale Geräuschentwicklung in allen Betriebszuständen des Kolbens erforderliche Führung nicht möglich ist.

Von dieser Problematik ausgehend liegt der Erfindung die Aufgabe zugrunde, dem Kolbenschaft durch geschickte Anordnung der Regelstreifen ein solches Ausdehnungsverhalten aufzuzwingen, daß trotz der an dem oberen und unteren Schaftende vorgesehenen hydraulischen Schmierkeilabschnitte eine geräuscharme Führung des Kolbens in allen Betriebszuständen sicher gewährleistet ist.

Gelöst wird diese Aufgabe durch einen Kolben mit einer Schaftausführung nach den Merkmalen des kennzeichnenden Teils des Patentanspruchs 1.

Zweckmäßige Ausgestaltungen sind Gegenstand der Unteransprüche.

Der besondere Vorteil der erfindungsgemäßen Ausführung besteht darin, daß der Kolben in dem axial mittleren Kolbenbereich sein engstes Einbauspiel sowohl im kalten als auch im warmen Betriebszustand im Motor haben kann. Denn durch die vorgesehene Lage des Regelstreifens und seine Abstimmung in der Regelwirkung mit dem Schaftaufbau liegt der Bereich der geringsten Wärmeausdehnung an den Streifen axial zwischen dem oberen und unteren radialen Schafteinzug.

Ein Ausführungsbeispiel der Erfindung ist in der Zeichnung dargestellt.

Es zeigen

Fig. 1 einen Kolben teils im Längsschnitt, teils in Ansicht,
Fig. 2 einen Schnitt durch den Kolben nach Linie II-II.

Der Kolben besteht aus einer gegossenen Aluminium-Siliziumlegierung. Der Kolbenschaft 1 ist in Druck- Gegendruckrichtung durch einen durch die unterste Ringnut 2 verlaufenden horizontalen Schlitz von dem Kolbenkopf 3 getrennt. Der Durchmesser des Kolbens beträgt D = 95 mm. Die Kompressionshöhe mißt H = 43 mm. In dem an die Pleuelschwingebene angrenzenden Bereich von jeweils etwa 50° zu beiden Seiten dieser Ebene beträgt die Kolbenschafthöhe etwa A = 43 mm.

Die axiale Höhe des Streifens beträgt 5 = 8 mm. Die axiale Mitte des Streifens liegt 2,5 mm oberhalb der Mitte der Schafthöhe A. Der Abstand der radial außenliegenden Bolzennabenstirnflächen mißt T = 65 mm.

In Kolbenbolzenrichtung ist der Schaft dagegen 10 % kurzer. Ger Regelstreifen 4 ist in dem mittleren Drittel der axialen Höhe A des Kolbenschaftes im Bereich der Druck-Gegendruckrichtung des Kolbens angebracht. Er erstreckt sich bis in die Wand der Nabenbohrung hinein. An dem oberen und unteren Schaftende ist der Kolbenschaft jeweils auf seiner Außenfläche in Bereichen 5 jeweils über eine Höhe von 5 mm zu dem betreffenden Schaftende hin ballig um diametral 0,2 mm eingezogen.

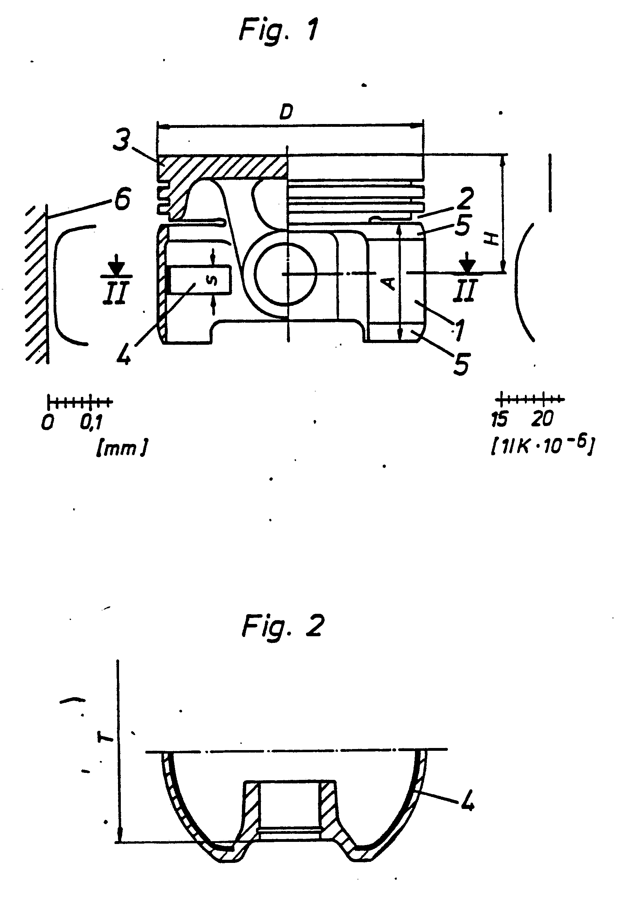

Links neben dem Kolben in der Fig. 1 ist die Schaftkontur in einem Schnitt längs der Kolbenachse und senkrecht zur Bolzenachse aufgezeigt. Unter der gezeichneten Schaftkontur sind die radialen Längenwerte in mm eingetragen. Die Zylinderlauffläche ist mit der Wand 6 angedeutet. Das radiale Einbauspiel des Kolbens im kalten Zustand beträgt in der Mitte des Regelstreifens hier etwa 0,02 mm. Die entsprechenden radialen Einbauspiele am oberen Schaftende bemessen sich auf 0,12 mm und am unteren Schaftende auf 0,1 mm.

Rechts neben dem Kolben in Fig. 1 ist die Kontur der Wärmeausdehnungszahlen bei gleichmäßiger Erwärmung auf 150° C (Grundsusdehnung der Kolbenlegierung dieses Beispieles $21 \times 10^{-6}$ mm/mmK) des Kolbenschaftes aufgetragen. Unterhalb der Kontur sind die betreffenden Werte der Ausdehnungszahlen eingetragen. Diese Kurve der Wärmeausdehnungswerte zeigt recht anschaulich die Lage der geringsten Wärmeausdehnung im Bereich der Lage des Regelstreifens 4.

**Patentansprüche**

1. Aluminium-Tauchkolben für Verbrennungsmotoren mit Regelstreifen (4) aus Stahl im Kolbenschaft, gekennzeichnet durch folgende Merkmale
a) mindestens je ein horizontal verlaufender Regelstreifen (4) ist in dem Bereich des axial mittleren Drittels der Schafthöhe in Druck-Gegendruckrichtung des Kolbens in den sich zwischen den Nabenbohrungen erstreckenden Schaftinnenflächen an und/oder eingeformt,
b) die tragenden Außenflächen des Kolbenschaftes (1) sind in ihrem oberen und unteren Ende jeweils auf einer axialen Länge von 5 bis zu 40 % des Kolbendurchmessers soweit ballig zum jeweiligen Schaftende hin eingezogen, daß die Balligkeit dort in allen Betriebszuständen des Kolbens erhalten bleibt,
c) bei einer gleichmäßigen Erwärmung des Kolbens auf 150 Grad Celsius weist der axial zwischen den eingezogenen Schaftendbereichen liegende Schaftabschnitt in den an die Pleuelschwingebene angrenzenden Umfangsbereichen über eine axiale Höhe in der Größe von 5 bis 30 % des Kolbendurchmessers die größten Schaftaußendurchmesser auf.
2. Tauchkolben nach Anspruch 1,
dadurch gekennzeichnet,
daß bei der sich im Betriebszustand minimal einstellenden Balligkeit der Schaftendbereiche (5) an deren jeweiligen Enden ein radialer Spalt von 0,05 mm bezogen auf eine durch den maximalen Schaftdurchmesser gelegte Zylinderfläche verbleibt.
3. Tauchkolben nach einem der vorhergehenden Ansprüche,
dadurch gekennzeichnet,
daß die axiale Länge der ballig verlaufenden Schaftendbereiche (5) zwischen 5 % bis zu 10 - 20 % des Kolbendurchmessers beträgt.
4. Tauchkolben nach einem der vorhergehenden Ansprüche,
dadurch gekennzeichnet,
daß auf jeder Seite der Bolzennaben lediglich ein Regelstreifen (4) angeordnet ist und daß dieser eine axiale Höhe zwischen 5 und 25 % des Kolbendurchmessers aufweist.
5. Tauchkolben nach einem der vorhergehenden Ansprüche,
dadurch gekennzeichnet,
daß die Regelstreifen (4) lediglich an ihren Enden in das Schaftmaterial eingeformt sind, im übrigen zumindest auf ihrem Außenumfang formschlüssig an der Schaftinnenfläche anliegen und zumindest auf ihrem Innenumfang keine Berührung mit dem Schaftmaterial aufweisen.
6. Tauchkolben nach einem der vorhergehenden Ansprüche,
dadurch gekennzeichnet,
daß die Regelstreifen (4) umfangsmäßig bis in den Bereich der Nabenbohrungswände verlaufen.
7. Tauchkolben nach einem der vorhergehenden Ansprüche,
dadurch gekennzeichnet,
daß die Regelstreifen (4) sich umfangsmäßig mindestens über einen Bereich von 90 Grad und maximal 140 Grad erstrecken.
8. Tauchkolben nach einem der vorhergehenden Ansprüche,
gekennzeichnet durch die nachfolgenden Maßverhältnisse

$H/D = 25 - 50 \%$
$T/D = 45 - 80 \%$
$A/D = 20 - 50 \%$
$s/D = 5 - 25 \%$

mit    D = Kolbendurchmesser
H = Kompressionshöhe
T = Abstand der radial außen liegenden Nabenflächen zueinander
A = Schaftlänge unterhalb der unteren Ringnut im Schnittpunkt mit der Pleuelschwingebene
s = Gesamte axiale Streifenhöhe

**Revendications**

1. Piston-plongeur en aluminium pour moteurs à combustion interne, ce piston comportant des bandes (4) de régulation en acier dans sa jupe et étant caractérisé par les caractéristiques suivantes:
a) au mains une bande (4) de régulation, s'étendant horizontalement, est disposée dans chaque cas dans la zone du tiers médian axial de la hauteur de la jupe, dans le sens de pression et de contre-pression du piston, en étant moulée contre et/nu dans les surfaces intérieures de la jupe s'étendant entre les alésages de bossages;
b) les surfaces extérieures d'appui de la jupe (1) du piston comportent, à leurs extrémités supérieure et inférieure, dans chaque cas sur une longueur axiale de 5 à 40 % du diamètre du piston, un rentrant de forme convexe en direction de chaque extrémité de jupe considérée, de telle façon que la convexité y soit conservée dans toutes les situations de fonctionnement du piston,

c) dans le cas d'un échauffement régulier du piston à 150 degrés Celsius, le tronçon situé axialement entre les zones d'extrémité de jupe rentrées dans les zones périphériques avoisinant le plan de débattement de la bielle, présente, sur une hautuer axiale de l'ordre de grandeur de 5 à 30 % du diamètre du piston, les plus grands diamètres de jupe.

2. Piston-plongeur selon la revendication 1, caractérisé en ce qu'avec la convexité des zones (5) d'extrémités de jupe, qui s'installe de façon minimale en situation de fonctionnement, il subsiste à chacune de leurs extrémités une fente radiale de 0,05 mm par rapport à une surface de cylindre fixée par le diamètre maximal de jupe.

3. Piston-plongeur selon l'une des revendications précédentes, caractérisé en ce que la longueur axiale des zones (5) d'extrémité de jupe de forme convexe représente entre 5 % et jusqu'à 10 à 20 % du diamètre du piston.

4. Piston-plongeur selon une des revendications précédentes, caractérisé en ce que, de chaque côté des bossages d'axes, on ne dispose qu'une seule bande (4) de régulation et en ce que celle-ci présente une hauteur axiale comprise entre 5 et 25 % du diamètre du piston.

5. Piston-plongeur selon une des revendications précédentes, caractérisé en ce que les bandes (4) de régulation ne rentrent dans le matériau de jupe qu'à leurs extrémités et qu'en outre elles s'appliquent tout contre la surface intérieure de la jupe au moins par leur contour extérieur et elles ne présentent aucun contact avec le matériau de la jupe, au moins sur leur contour intérieur.

6. Piston-plongeur selon une des revendications précédentes, caractérisé en ce que les bandes (4) de régulation s'étendent par leur périphérie jusque dans la zone des parois d'alésage de bossage de piston.

7. Piston-plongeur selon une des revendications précédentes, caractérisé en ce que les bandes (4) de régulation s'étendent périphériquement au minimum sur une zone de 90 degrés et au maximum sur une zone de 140 degrés.

8. Piston-plongeur selon l'une des revendications précédentes, caractérisé par les rapports suivants entre ses cotes:

$$H/D = 25 \text{ à } 50 \%$$
$$T/D = 45 \text{ à } 80 \%$$
$$A/D = 20 \text{ à } 50 \%$$
$$s/D = 5 \text{ à } 25 \%$$

D étant le diamètre du piston,
H, la hauteur de compression
T, la distance mutuelle séparant les surfaces de bossage situées radialement vers l'extérieur,
A, la longueur de la jupe en-dessous de la gorge de segment inférieure au point d'intersection avec le plan de débattement de la bielle,
s, la hauteur axiale totale de bande.

## Claims

1. Aluminium plunger piston for internal combustion engines comprising regulating strips (4) of steel in the piston shank, characterized by the following features

a) at least one horizontally extending regulating strip (4) is, in the region of the axial central third of the shank height in the pressure-counterpressure direction of the piston, integrally formed onto and/or into the internal surfaces of the shank extending between the boss bores,

b) the bearing external surfaces of the piston shank (1) are each, in their upper and lower ends, curved inwards convexly towards the shank end over an axial length of 5 to 40 % of the piston diameter sufficiently far for the convex form to be retained there in all operating states of the piston,

c) with a uniform heating-up of the piston to 150 % C, the shank portion situated axially between the inwardly curved end regions of the shank possesses, in the peripheral zones adjoining the plane of oscillation of the connecting rod, the largest shank external diameters over an axial height of the order of 5 to 30 % of the piston diameter.

2. Plunger piston according to claim 1, characterized in that, with the minimum convex curvature of the end zones (5) of the shank which occurs in the operating condition, a radial gap of 0.05 mm with respect to a cylinder surface passing through the maximum shank diameter remains at each of these ends.

3. Plunger piston according to one of the preceding claims, characterized in that the axial length of the convexly curved shank end zones (5) is between 500 and 10 - 20 % of the piston diameter.

4. Plunger piston according to one of the preceding claims, characterized in that, on each side of the piston pin bosses, only one regulating strip (4) is disposed, and that this has an axial height between 5 and 25 % of the piston diameter.

5. Plunger piston according to one of the preceding claims, characterized in that the regulating strips (4) are integrally formed only at their ends into the material of the shank, and for the remainder bear at least on their external periphery form-fittingly against the inner surface of the shank and do not have any contact, at least on their inner periphery, with the shank material.

6. Plunger piston according to one of the preceding claims, characterized in that the regulating strips (4) extend circumferentially into the region of the walls of the boss bores.

7. Plunger piston according to one of the preceding claims, characterized in that the regulating strips (4) extend circumferentially at least through a zone of 90° and at most through 140°.

8. Plunger piston according to one of the preceding claims, characterized by the following dimensional relationships:

H/D = 25 - 50 %
T/D = 45 - 80 %
A/D = 20 - 50 %
s/D = 5 - 25 %

where 
D = piston diameter
H = compression stroke
T = distance between the radially outermost surfaces of the bosses
A = shank length below the lower annular groove at the intersection with the plane of oscillation of the connecting rod
s = total axial extent of strip.

**Fig. 1**

**Fig. 2**

1